Europäisches Patentamt

European Patent Office

Office européen des brevets

(11) Numéro de publication: **0 407 285 A1**

# (12) DEMANDE DE BREVET EUROPEEN

(21) Numéro de dépôt: 90401908.0

(22) Date de dépôt: 02.07.90

(51) Int. Cl.⁵: **G01F 11/26**

(30) Priorité: 03.07.89 FR 8908878

(43) Date de publication de la demande:
09.01.91 Bulletin 91/02

(84) Etats contractants désignés:
GR

(71) Demandeur: **Lontrade, Jean-Pierre**
**34, avenue Julien**
**F-63000 Clermont-Ferrand(FR)**

(72) Inventeur: **Lontrade, Jean-Pierre**
**34, avenue Julien**
**F-63000 Clermont-Ferrand(FR)**

(74) Mandataire: **Clisci, Serge et al**
**S.A. FEDIT-LORIOT CONSEILS EN PROPRIETE**
**INDUSTRIELLE 38, avenue Hoche**
**F-75008 Paris(FR)**

(54) **Obturateur-doseur-distributeur pour récipient de liquide.**

(57) Obturateur-doseur pour récipient de liquide comprenant un réceptacle doseur clos (2) mobile angulairement dans un fourreau (1) solidaire du col (4) du récipient (5), réceptacle et fourreau présentant au voisinage de leurs extrémités, dans leurs parois latérales respectives, des ouvertures (7, 8, 17, 18 - 9, 11, 12, 13) pouvant être amenées en regard ou obturées à volonté pour isoler le réceptacle et le récipient de l'extérieur, tout en les faisant ou non communiquer entre eux, ou faire communiquer le receptacle uniquement avec l'extérieur, le récipient restant isolé, suivant la position angulaire choisie de fermeture, remplissage, ou distribution de la dose contenue dans le réceptacle.

FIG.6

## OBTURATEUR-DOSEUR-DISTRIBUTEUR POUR RECIPIENT DE LIQUIDE

La présente invention concerne l'industrie du conditionnement, plus particulièrement le conditionnement de substances liquides dans des récipients équipés de dispositifs obturateurs-doseurs-distributeurs, notamment pour produits pharmaceutiques.

On connaît de nombreux dispositifs, insérés partiellement dans le goulot d'un récipient qui délivrent à volonté une quantité dosée du liquide contenu dans le récipient. Certains de ces dispositifs comportent un tiroir-réceptacle coulissant axialement dans un fourreau solidaire du goulot entre une position "enfoncé" où le tiroir, isolé de l'extérieur, communique avec l'intérieur du récipient, ce qui permet de le remplir par retournement du récipient, et une position "sorti" dans laquelle le tiroir, isolé de l'intérieur du récipient, communique avec l'extérieur pour la distribution de la dose enfermée dans le tiroir. Un tel dispositif a été décrit il y a un siècle dans le brevet USA-416435.

Les dispositifs de ce type sont simples et peu onéreux mais présentent des difficultés de réalisation pratique pour obtenir une bonne étanchéité avec des tolérances normales pour une fabrication en série industrielle. Les difficultés découlent notamment du fait du risque de voilage du tiroir lorsqu'on le tire de façon désaxée pour distribuer la dose, ce qui favorise des fuites entre le tiroir et le fourreau.

L'invention a pour but un dispositif obturateur-doseur-distributeur simple à réaliser et à utiliser, aisément réalisable industriellement à prix réduit, fiable et ne présentant pas les inconvénients des dispositifs antérieurs. Ces avantages découlent essentiellement du fait que le réceptacle-doseur est monté pivotant et non pas coulissant axialement dans le fourreau.

L'invention a pour objet un obturateur-doseur-distributeur pour récipient de liquide comprenant un réceptacle doseur clos de révolution coulissant de façon étanche dans un fourreau homothétique ouvert assujetti à l'intérieur du col du récipient, et manuellement mobile entre une position d'obturation-remplissage où le réceptacle et le récipient sont isolés de l'extérieur et communiquent entre eux pour le remplissage du réceptacle par retournement du récipient, et une position de distribution de la dose contenue dans le réceptacle où le réceptacle communique uniquement avec l'extérieur, le récipient retourné étant isolé de l'extérieur, obturateur-doseur-distributeur caractérisé en ce que le réceptacle en forme de pot est mobile angulairement et calé axialement dans le fourreau en forme de pot inversé et en ce que le fourreau débouche en-dessous et au-dessus du col du récipient respectivement par des ouvertures dans sa paroi latérale, cependant que le réceptacle présente également dans sa paroi latérale des passages correspondants que l'on peut amener en regard des ouvertures du fourreau, ou les obturer à volonté par rotation du réceptacle dans le fourreau, suivant la position désirée.

Pour une plus grande sécurité de stockage, il peut être préférable de prévoir une troisième position angulaire de fermeture totale, où le réceptacle est isolé à la fois de l'extérieur et de l'intérieur du récipient, lui-même isolé de l'extérieur.

Plus particulièrement dans les applications au conditionnement de produits pharmaceutiques où l'obturateur-doseur-distributeur suivant l'invention peut être avantageusement substitué au compte-gouttes classique pour le dosage de petits volumes de liquide, la précision et la fiabilité du dosage de la dose distribuée implique une vidange totale du réceptacle. Pour cela, suivant une forme de réalisation pratique, le réceptacle présente dans sa paroi latérale extérieure, diamétralement opposée, deux rainures longitudinales dont l'une, de passage du liquide, débouche à une extrémité par une ouverture dans le réceptacle en regard de l'ouverture de distribution du fourreau, en position de distribution, cependant que sa face latérale extérieure est amenée en regard d'une ouverture du fourreau débouchant dans le récipient, en position d'obturation-remplissage; et en ce que l'autre rainure, d'aération, communique par une ouverture avec l'intérieur du réceptacle à l'extrémité opposée en regard d'une ouverture du fourreau débouchant dans le récipient, en position de remplissage, cependant que sa face latérale est amenée en regard d'une ouverture du fourreau débouchant à l'extérieur, en position de distribution.

Il est généralement avantageux que le réceptacle se termine extérieurement par un bouton de manoeuvre recouvrant l'extrémité du fourreau, et que des moyens de butée coopérants du réceptacle et du fourreau matérialisent les positions angulaires du réceptacle dans le fourreau.

Un moyen élastique de rappel du réceptacle en position d'obturation ou de fermeture peut faciliter la manoeuvre et apporter une sécurité supplémentaire.

A cet effet, suivant un mode de réalisation simple, le réceptacle et le fourreau sont maintenus assemblés par une tige axiale reliant leurs fonds respectifs et dont la déformation par torsion lors du pivotement du réceptacle dans le fourreau crée une force de rappel élastique dans la position de fermeture.

La distribution de la dose peut s'effectuer par un canal formé par assemblage de deux demi-canaux hémi-cylindriques, respectivement solidaires du réceptacle et du fourreau, amenés en regard l'un de l'autre seulement en position de distribution.

Il est possible d'ajuster la dose définie par le réceptacle en y insérant une cale modifiant son volume intérieur.

Dans un tel mode de réalisation, il est avantageux que le canal de distribution soit parallèle à l'axe du récipient afin d'inciter l'utilisateur à bien retourner le récipient et assurer ainsi un bon remplissage et une bonne vidange du réceptacle.

L'invention pourra être plus aisément comprise par l'examen et la description détaillée des dessins annexés qui représentent un mode de réalisation de l'invention, choisi simplement à titre d'exemple parmi les nombreuses formes d'éxécution, adaptations et variantes de l'invention concevables par un technicien averti.

Sur ces dessins,

- la figure 1 est une vue schématique, en élévation et en coupe axiale d'un obturateur-doseur-distributeur suivant l'invention, en position de fermeture totale;

- la figure 2 est une vue en coupe diamétrale suivant la ligne II-II de la figure 1;

- la figure 3 est une vue de dessus, suivant la flèche III de la figure 1;

- la figure 4 est une vue schématique, en élévation et partiellement en coupe axiale de l'obturateur-doseur-distributeur de la figure 1, monte sur un récipient, en position d'obturation-remplissage après rotation de 45° du réceptacle, par rapport à la figure 1;

- la figure 5 est une vue de dessus, suivant la flèche V de la figure 4;

- la figure 6 est une vue analogue à celle de la figure 4 du même obturateur-doseur-distributeur en position de distribution de la dose enfermée dans le réceptacle, après rotation de 45° du réceptacle, par rapport à la figure 4, soit 90° par rapport à la figure 1; et,

- la figure 7 est une vue de dessus, suivant la flèche VII de la figure 6.

Sur ces figures les éléments correspondants sont désignés par les mêmes références numériques. Les dimensions et les proportions respectives de ces éléments peuvent ne pas être respectées afin de rendre les dessins plus lisibles.

L'obturateur-doseur-distributeur représenté sur ces dessins est constitué de deux pièces; un fourreau 1 et un réceptacle 2 en forme de pots insérés tête-bêche l'un dans l'autre, moules en matière plastique, notamment en polyéthylène ou en chlorure de polyvinyle.

Le fourreau 1, légèrement tronconique, présente au voisinage de son ouverture, une collerette 3 de fixation par encliquetage sur la cannette 4 d'un récipient 5. La paroi latérale est percée de deux ouvertures diamétralement opposées au voisinage immédiat du fond 6 : une ouverture 7 de remplissage et une ouverture 8 d'aération.

Le réceptacle 2 est extérieurement de forme tronconique complémentaire de l'intérieur du fourreau 1, dans lequel il pivote à frottement doux. Il présente deux rainures longitudinales diamétralement opposées : une rainure 9, de passage de liquide, débouchant au voisinage immédiat du fond 10 par une ouverture 11 dans le réceptacle 2; et une rainure 12 d'aération débouchant, à son extrémité opposée au fond 10, par une ouverture 13 dans le réceptacle 2.

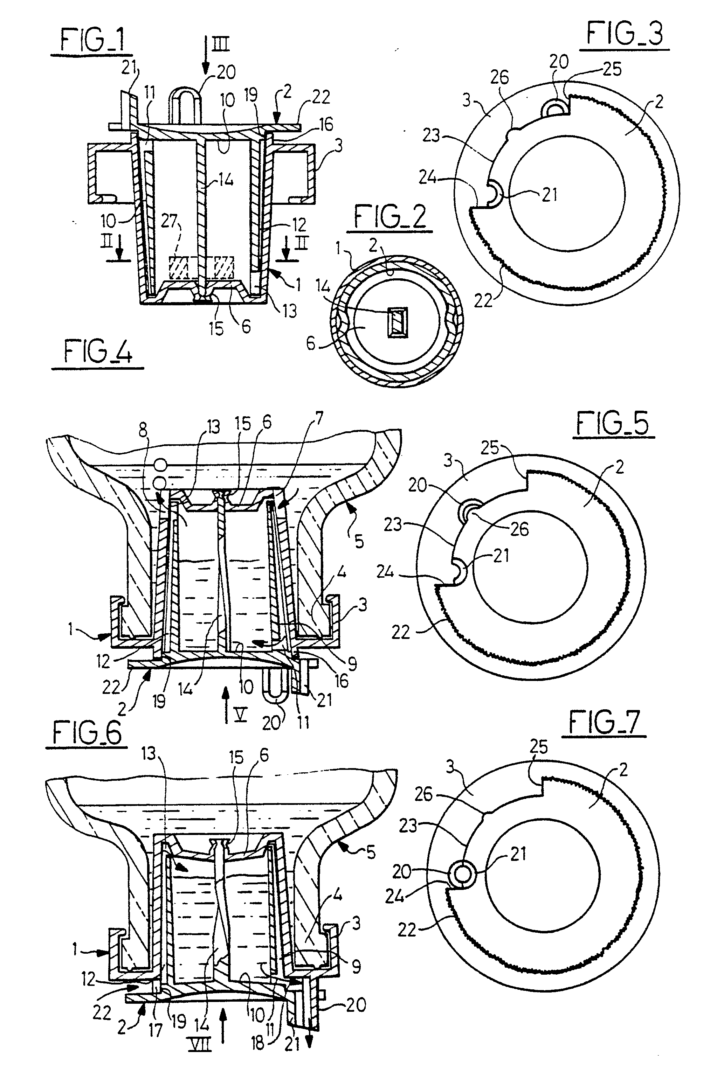

Une tige plate, axiale, 14 issue du fond 10 du réceptacle 3, traverse le fond 6 du fourreau 1 par un téton de forme complémentaire dans lequel l'extrémité de la tige 14 est immobilisée sous légère tension et maintenue par pinçage, soudure, sertissage, ou autre moyen connu. Le fond 6 du fourreau forme une cloche vers l'intérieur et assure ainsi, avec la tige 14 maintenue sous tension, un maintien élastique du réceptacle dans le fourreau. Ceci permet un pivotement à frottement doux du réceptacle dans le fourreau dans de bonnes conditions d'étanchéité, aussi bien en position de fermeture (figure 1) où la tige 14 est droite, qu'en position de distribution (figure 6) où la tige 14 a subi une torsion de 90°, entraînant un léger raccourcissement, qui produit un effet de ressort rappelant le réceptacle dans la position de fermeture de la figure 1.

Le fourreau 1 se prolonge, au-delà de la collerette 3 par une courte jupe 16 présentant deux échancrures diamétralement opposées, décalées de 45° par rapport aux ouvertures 7 et 8 : une échancrure 17 pour l'aération du réceptacle en position de distribution (figure 6) par la rainure 12 du réceptacle, et une échancrure 18 pour l'évacuation de la dose de liquide du réceptacle provenant de l'ouverture 11 du réceptacle en position de distribution (figure 6).

Une partie latérale cylindrique 19 du fond 10 du réceptacle porte à frottement doux contre la face intérieure de la jupe 16 et isole le réceptacle de l'extérieur, sauf en position de distribution.

Sur la face supérieure de la collerette 3 du fourreau 1, fait saillie un demi-canal hémi-cylindrique 20, d'axe parallèle à l'axe du fourreau 1, dont l'intérieur est tourné vers l'échancrure 18 de la jupe 16 du fourreau.

De même, un demi-canal hémi-cylindrique 21, complémentaire du demi-canal 20, d'axe parallèle à l'axe du réceptacle, fait saillie de la face supérieure d'un bouton de commande manuelle 22 à bord cranté qui prolonge le fond 10 du réceptacle. Ce demi-canal 21 communique avec l'ouverture 11 du réceptacle à travers l'échancrure 18 du fourreau 1, seulement en position de distribution (figures 6-7) où les deux demi-canaux 20, 21 sont affrontés pour former un canal unique d'évacuation de la dose enfermée dans le réceptacle, d'axe parallèle à celui du récipient 5.

Le bouton de commande 22 du réceptacle 2 présente une échancrure latérale 23 en quart de cercle dont les extrémités 24, 25 coopèrent en butée avec le demi-canal 20 du fourreau 1 pour définir et matérialiser respectivement les positions de fermeture (figure 3) et de distribution (figure 7) du bouton de commande 22, et par suite du réceptacle 2 par rapport au fourreau 1. Un petit téton 26 faisant saillie latéralement au milieu du bord de l'échancrure 23 du bouton de commande 22 coopère élastiquement avec le demi-canal 20 du fourreau pour définir et matérialiser la position d'obturation-remplissage (figure 5) du bouton de commande 22 et par suite du réceptacle 2 par rapport au fourreau 1.

Lorsqu'on désire obtenir une dose précise, éventuellement ajustable, on peut insérer dans le réceptacle une cale, par exemple en forme d'anneau 27, comme indiqué en pointillé sur la figure 1, ou de bille, pour modifier le volume intérieur disponible du réceptacle. De la même façon on peut réaliser des obturateurs-doseurs-distributeurs de doses diverses à la demande à partir d'un type standard unique, ce qui permet des fabrications industrielles en grande série à bas prix.

## Revendications

1. Obturateur-doseur-distributeur pour récipient de liquide comprenant un réceptacle doseur clos de révolution coulissant de façon étanche dans un fourreau homothétique ouvert assujetti à l'intérieur du col du récipient, et manuellement mobile entre une position d'obturation-remplissage où le réceptacle et le récipient sont isolés de l'extérieur et communiquent entre eux pour le remplissage du réceptacle par retournement du récipient, et une position de distribution de la dose contenue dans le réceptacle où le réceptacle communique uniquement avec l'extérieur, le récipient retourné étant isolé de l'extérieur; obturateur-doseur-distributeur, caractérisé en ce que le réceptacle (2) en forme de pot est mobile angulairement et calé axialement dans le fourreau (1) en forme de pot inversé et en ce que le fourreau débouche en-dessous et au-dessus du col du récipient (5) respectivement par des ouvertures (7, 8, 17, 18) dans sa paroi latérale, cependant que le réceptacle (2) présente également dans sa paroi latérale des passages correspondants (9, 12) que l'on peut amener en regard des ouvertures du fourreau, ou les obturer à volonté par rotation du réceptacle dans le fourreau, suivant la position désirée.

2. Obturateur-doseur-distributeur suivant la revendication 1, caractérisé en ce qu'il présente une troisième position angulaire de fermeture totale, où le réceptacle (2) est isolé à la fois de l'extérieur et de l'intérieur du récipient (5), lui-même isolé de l'extérieur.

3. Obturateur-doseur-distributeur, suivant l'une des revendications 1 et 2, caractérisé en ce que le réceptacle (2) présente dans sa paroi latérale extérieure, diamétralement opposée, deux rainures longitudinales dont l'une (9), de passage du liquide, débouche à une extrémité par une ouverture (11) dans le réceptacle en regard de l'ouver ture de distribution (18) du fourreau (1), en position de distribution, cependant que sa face latérale extérieure est amenée en regard d'une ouverture (7) du fourreau débouchant dans le récipient, en position d'obturation-remplissage; et en ce que l'autre rainure (12), d'aération, communique par une ouverture (13) avec l'intérieur du réceptacle à l'extrémité opposée en regard d'une ouverture (8) du fourreau débouchant dans le récipient, en position de remplissage, cependant que sa face latérale est amenée en regard d'une ouverture (17) du fourreau débouchant a l'extérieur, en position de distribution.

4. Obturateur-doseur-distributeur, suivant l'une des revendications 1 à 3 caractérisé en ce que le réceptacle (2) se termine extérieurement par un bouton de manoeuvre (22) recouvrant l'extrémité du fourreau, et en ce que des moyens de butée coopérants (24, 25, 26) du réceptacle et (20) du fourreau matérialisent les positions angulaires du réceptacle dans le fourreau.

5. Obturateur-doseur-distributeur, suivant l'une des revendications 1 à 4, caractérisé en ce qu'il comporte un moyen élastique de rappel (14) du réceptacle (2) en position d'obturation.

6. Obturateurdoseur-distributeur, suivant la revendication 5, caractérisé en ce que le réceptacle (2) et le fourreau (1) sont maintenus assemblés par une tige axiale (14) reliant leurs fonds respectifs (6, 10) et dont la déformation par torsion lors du pivotement du réceptacle dans le fourreau crée une force de rappel élastique dans la position de fermeture.

7. Obturateur-doseur-distributeur, suivant l'une des revendications 1 à 6, caractérisé en ce que la distribution de la dose s'effectue par un canal formé par assemblage de deux demi-canaux hémicylindriques (20, 21), respectivement solidaires du réceptacle (2) et du fourreau (1), amenés en regard l'un de l'autre seulement en position de distribution.

8. Obturateur-doseur-distributeur, suivant la revendication 7, caractérisé en ce que le canal de distribution (20, 21) est parallèle à l'axe du récipient.

9. Obturateur-doseur-distributeur suivant l'une des revendications 1 à 8, caractérisé en ce que le réceptacle renferme une cale (27) modifiant son volume intérieur et conditionnant ainsi la dose.

FIG_1

FIG_2

FIG_3

FIG_4

FIG_5

FIG_6

FIG_7

Office européen
des brevets

# RAPPORT DE RECHERCHE EUROPEENNE

Numero de la demande

EP 90 40 1908

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | FR-A- 431 168 (M. ROSENTHAL) <br> * En entier * <br> --- | 1,4 | G 01 F 11/26 |
| A | US-A-1 914 766 (W. ZALOSCHAN) <br> * En entier * <br> --- | 1,2 | |
| A | DE-C- 448 095 (W.O. HOHWIELER) <br> * En entier * <br> --- | 1,3-5 | |
| A | FR-A- 467 101 (FRITZ) <br> * En entier * <br> --- | 1,3,7,8 | |
| A | DE-A-3 133 835 (SCHUCKMANN) <br> * Figures * <br> --- | 1,5 | |
| A | FR-A-1 082 562, (R. BOURDARIE) <br> * Page 2, colonne de droite, lignes 23-47; figures 7,8 * <br> ----- | 9 | |

**DOMAINES TECHNIQUES RECHERCHES (Int. Cl.5)**

G 01 F

Le présent rapport a été établi pour toutes les revendications

| Lieu de la recherche | Date d'achèvement de la recherche | Examinateur |
|---|---|---|
| LA HAYE | 20-09-1990 | ROSE A.R.P. |

EPO FORM 1503 03.82 (P0402)